# EUROPÄISCHE PATENTSCHRIFT

(11) **EP 4 313 876 B1**
(45) Veröffentlichungstag und Bekanntmachung des Hinweises auf die Patenterteilung: **03.07.2024**
(21) Anmeldenummer: 22733352.3
(22) Anmeldetag: 08.06.2022
(51) Int. Cl.: C01B 13/02, C02F 1/461, C02F 1/72, C02F 101/16

(54) **VORRICHTUNG UND VERFAHREN ZUR UMWANDLUNG VON AMMONIAK AUS EINER AMMONIAK ENTHALTENDEN WÄSSRIGEN FLÜSSIGKEIT IN MOLEKULAREN STICKSTOFF**
APPARATUS AND PROCESS FOR CONVERTING AMMONIA FROM AN AMMONIA-CONTAINING AQUEOUS SOLUTION TO MOLECULAR NITROGEN
APPAREIL ET PROCÉDÉ DE CONVERSION DE L'AMMONIAC D'UNE SOLUTION AQUEUSE CONTENANT DE L'AMMONIAC EN AZOTE MOLÉCULAIRE

(30) Priorität: 08.06.2021 DE 102021114704
(43) Veröffentlichungstag der Anmeldung: 07.02.2024
(73) Patentinhaber: Jassen - Kunststoffzentrum GmbH - Apparatebau, Zuschnitte und Formung, 79585 Steinen (DE)
(72) Erfinder: ILLENBERGER, Marco, 79110 Freiburg (DE); ILLENBERGER, Bernhard, 79585 Steinen (DE); JASSEN, Hartmut, 79585 Steinen (DE)
(74) Vertreter: Mertzlufft-Paufler, Cornelius
(86) Internationale Anmeldenummer: PCT/EP2022/065520
(87) Internationale Veröffentlichungsnummer: WO 2022/258675

(56) Entgegenhaltungen:
- CN-A- 102 249 424
- JP-A- 2015 038 231
- US-A1- 2009 317 308

## Beschreibung

Die Erfindung betrifft eine Vorrichtung und ein Verfahren zur Umwandlung von Ammoniak aus einer Ammoniak enthaltenden wässrigen Flüssigkeit in molekularen Stickstoff.

Ammoniak enthaltende wässrige Flüssigkeiten, bei denen das Ammoniak nur in niedriger Konzentration vorliegt, sind allgegenwärtig.

Derartige Flüssigkeiten stammen beispielsweise aus organischen Abfällen wie Haushalts-Abwässern, Klärschlämmen oder Gärprodukten, die beispielsweise in Biogasanlagen entstehen.

Derzeit wird in der Praxis bei organischen Abfällen das Ammoniak entweder in dem Abfallprodukt belassen oder diesem unter erheblicher Energieaufwendung entzogen.

So werden derzeit Gärprodukte häufig auf landwirtschaftlichen Nutzflächen verteilt, ohne den Ammoniakanteil zu reduzieren, sodass das Ammoniak direkt in die Böden gelangt, wo sodann der Nitrifikationsprozess von Ammoniak zu Nitrat und der Denitrifikationsprozess von Nitrat zu molekularem Stickstoff auf natürliche Weise stattfindet.

Von Kläranlagen ist es bekannt, diesen natürlichen Prozess der Nitrifikation und der Denitrifikation durch Kultivierung geeigneter Bakterien nachzubilden. Für die Nitrifikation werden große Mengen Sauerstoff benötigt, für dessen Herstellung viel Energie aufgewendet werden muss. Der mikrobielle Prozess lässt sich zudem nur schwer steuern.

Die Druckschrift US 2009/0317308 A1 offenbart eine Ammoniak-Luft-Brennstoffzelle, bei der Ammoniak als Brennstoff der Brennstoffzellenanode zugeführt und Luftsauerstoff als Oxidationsmittel der Zellkathode zugeführt durch natürliche Diffusion von Sauerstoff aus der Umgebungsluft. Die Zellanode und die Zellkathode sind durch eine Polymerelektrolytmembran, welche für Hydroxidionen passierbar ist, elektrisch getrennt. Die Offenlegungsschrift CN 102249424 A offenbart eine mikrobielle Brennstoffzelle zur Abwasserbehandlung, bei der keine Protonenaustauschmembran verwendet wird. Die Anode und die Kathode werden mit einem Film aus Bakterien umgeben. Es wird Stickstoff in das geschlossene System eingebracht, um den Sauerstoff aus dem System zu entfernen.

Der Erfindung liegt die Aufgabe zugrunde, möglichst umweltschonend das Ammoniak aus einer wässrigen, unreinen Flüssigkeit mit einer niedrigen Ammoniakkonzentration kontrolliert und effizient umzuwandeln und auf einen gewünschten Wert zu bringen.

Ein Gärprodukt kann beispielsweise etwa 800mg Ammoniak auf einen Liter Flüssigkeit enthalten. Gewünscht kann beispielsweise ein Wert von 150mg je Liter sein. Eine solche Ammoniakkonzentration kann beispielsweise optimal zur Herstellung eines Düngers in einem Bioreaktor sein.

Zur Lösung dieser Aufgabe schlägt die Erfindung die Merkmale von Anspruch 1 vor. Insbesondere wird somit erfindungsgemäß bei einer Vorrichtung der eingangs beschriebenen Art zur Lösung der genannten Aufgabe vorgeschlagen, dass die Vorrichtung Einrichtungen zur Zirkulation der Flüssigkeit in einem Kreislauf, einen Einlass zur Zufügung der Flüssigkeit in den Kreislauf und eine Entnahmeöffnung zur Entnahme der Flüssigkeit aus dem Kreislauf aufweist. Die Einrichtungen des Kreislaufs umfassen eine Kathodenkammer, die eine Kathode aufweist. Die Einrichtungen umfassen ferner eine Anodenkammer zur Umwandlung des Ammoniaks in molekularen Stickstoff, wobei die Anodenkammer eine Anode aufweist. Der Vorschlag sieht vor, dass die Anodenkammer eine Zuleitung für die zirkulierende Flüssigkeit hat, wobei die Anodenkammer einen Durchlass für die zirkulierende Flüssigkeit in die Kathodenkammer hat und wobei die Kathodenkammer eine Ausleitung für die zirkulierende Flüssigkeit hat, die mit der Zuleitung der Anodenkammer über eine Pumpe zum Pumpen der zirkulierenden Flüssigkeit verbunden ist. Weiterhin weist die Vorrichtung eine Sauerstoff-Zuleitung zur Zuführung von Wasserstoffperoxid und/oder in Wasser gelöstem Sauerstoff in den Kreislauf auf. Schließlich ist ein Material der Kathode ein Katalysator zur katalytischen Spaltung von Wasserstoffperoxid in molekularen Sauerstoff und Wasser.

Es wird daher eine Vorrichtung geschaffen, bei der eine Anoden- und eine Kathodenkammer einem gemeinsamen Kreislauf angehören. Die Flüssigkeit kann hierbei kontinuierlich und mehrfach durch Anoden- und Kathodenkammer geleitet werden.

Dies ermöglicht eine kontinuierliche, umweltschonende und kontrollierte Ammoniakumsetzung auch bei einer niedrigen Ammoniakausgangskonzentration und vor allem zu einer niedrigen finalen Ammoniakzielkonzentration, wobei bei der Ammoniakumsetzung zudem elektrische Energie erzeugt wird.

So ist es bei der in den Klärwerken durchgeführten bakteriellen Umsetzung nicht oder nur unter sehr hohem Energieaufwand möglich, eine Umsetzung hin zu niedrigen Ammoniakkonzentrationen von beispielsweise unterhalb von 10mg/Liter zu erreichen. Niedrige Ammoniakkonzentrationen in diesem Bereich sind allerdings häufig gefordert. Bei der erfindungsgemäßen Vorrichtung können hingegen derart niedrige Ammoniakkonzentrationen leicht erreicht werden. Zwar steigt der Zeitaufwand etwas, wenn sehr niedrige Ammoniakkonzentration erreicht werden sollen. Messungen haben allerdings gezeigt, dass innerhalb von Stunden oder wenigen Tagen sehr niedrige Ammoniakkonzentrationen von sogar unterhalb von 1mg/Liter erreicht werden können und dass hierbei sogar Energie erzeugt wird.

Die Anodenkammer ist ausgebildet, um im Betrieb Ammoniak in Stickstoff umzuwandeln. Die Kathodenkammer kann ausgebildet sein, um im Betrieb die von der Anode zur Kathode kommenden Elektronen an die Flüssigkeit abzugeben unter chemischer Beteiligung von in der Flüssigkeit befindlichen Protonen, Sauerstoff und/oder Wasserstoffperoxid, die zu Wassermolekülen umgewandelt werden können.

Um einen Elektronenfluss von der Anode zur Kathode zu ermöglichen, kann vorgesehen sein, dass die Anode und die Kathode elektrisch miteinander verbunden sind. Um die entstehende elektrische Energie nutzen zu können, kann vorgesehen sein, dass ein Verbraucher in der elektrischen Verbindung zwischen der Anode und der Kathode angeordnet ist.

Die Kathodenkammer hat bevorzugt zwei Elektroden an gegenüberliegenden Seiten der Kathodenkammer. Die beiden Elektroden können elektrisch miteinander verbunden sein.

Die Entnahmeöffnung kann verschließbar sein. Die Entnahmeöffnung kann beispielsweise durch einen Anschluss gegeben sein, der mit einem Ventil verschließbar sein kann. Die Entnahmeöffnung kann beispielsweise auch durch den Zugang eines nach oben offenen Behältnisses gegeben sein. So kann die Kathodenkammer ein Behältnis aufweisen, das nach oben mit einem Deckel verschließbar sein kann. Eine Entnahme der Flüssigkeit kann dann beispielsweise über einen in das Behältnis einführbaren Schlauch erfolgen. Da die Flüssigkeit in einem Kreislauf zirkuliert, kann die Entnahmeöffnung prinzipiell an jeder beliebigen Stelle des Kreislaufes ausgebildet sein.

Auch der Einlass kann grundsätzlich an jeder Stelle des Kreislaufes ausgebildet sein. Bevorzugt ist der Einlass allerdings an der Zuleitung der Anodenkammer angeschlossen oder ausgebildet. Dies kann insbesondere zur Initialisierung der Vorrichtung nützlich sein oder wenn die Zirkulation zwischenzeitlich unterbrochen wird, beispielsweise um Wasserstoffperoxid oder einen anderen Stoff zuzuleiten, der zunächst in die Anodenkammer fließen sollte.

Es kann auch vorgesehen sein, dass der Einlass zugleich die Entnahmeöffnung bildet.

Die Zuleitung und der Durchlass der Anodenkammer sind Einrichtungen des Kreislaufs. Im Betrieb fließt die zirkulierende Flüssigkeit durch diese hindurch.

Die Kathodenkammer und/oder die Anodenkammer umfassen bevorzugt jeweils mindestens einen flüssigkeitsdichten Behälter.

Ein erster Tank kann mit einem Einlass verbunden sein, mit dem ein Fluid dem Kreislauf zugefügt werden kann, beispielsweise mit dem zuvor erwähnten Einlass. Der erste Tank kann mit der Ammoniak enthaltenden wässrigen Flüssigkeit befüllt sein.

Ein zweiter Tank kann mit einem Einlass verbunden sein, mit dem ein Fluid dem Kreislauf zugefügt werden kann, beispielsweise mit dem zuvor erwähnten Einlass. Der zweite Tank kann mit Wasserstoffperoxid befüllt sein.

Bei einer vorteilhaften Ausgestaltung kann vorgesehen sein, dass der Durchlass der Anodenkammer ein Ventil aufweist, mit dem dieser öffen- und verschließbar ist. Bevorzugt ist das Ventil an oder in dem Durchlass ausgebildet. Das Ventil bietet die Möglichkeit, den Flüssigkeitskreislauf zu unterbrechen. Dies kann beispielsweise bei der Initialisierung der Vorrichtung von Vorteil sein oder in anderen Situationen, in denen eine normale Zirkulation der Flüssigkeit unterbrochen werden soll oder in denen eine Abgabe eines sich in der Anodenkammer befindlichen Stoffs in die Kathodenkammer durch den Durchlass unerwünscht ist.

Bei einer weiteren vorteilhaften Ausgestaltung der erfindungsgemäßen Vorrichtung kann vorgesehen sein, dass die Anodenkammer innerhalb der Kathodenkammer angeordnet ist. Eine solche Anordnung bietet vielfache Möglichkeiten. So kann hierdurch erreicht werden, dass ein Inhalt der Anodenkammer leicht in die Kathodenkammer abgegeben werden kann. Dies kann durch den Durchlass oder einen anderen Auslass erfolgen. So kann insbesondere erreicht werden, dass ein anderer Auslass nah an der in der Kathodenkammer angeordneten Kathode angeordnet ist. Wie an anderer Stelle noch genauer erläutert wird, kann dies vorteilhaft sein, da hierdurch Wasserstoffperoxid und/oder Sauerstoff unmittelbar an die Kathode gebracht werden kann, was den Ammoniakumsatz erhöhen kann.

Bei einer weiteren vorteilhaften Ausgestaltung kann vorgesehen sein, dass die Anodenkammer zusätzlich zu dem Durchlass mindestens einen weiteren Auslass in die Kathodenkammer hat. Bevorzugt hat jedes Anodenkammermodul einen separaten Auslass in die Kathodenkammer. Bevorzugt ist der mindestens eine weitere Auslass so dimensioniert ist, dass eine durch den Durchlass in die Kathodenkammer fließende Menge der Flüssigkeit eine gesamte durch den mindestens einen weiteren Auslass fließende Menge der Flüssigkeit übersteigt. Besonders bevorzugt ist der mindestens eine weitere Auslass so dimensioniert, dass die durch den Durchlass in die Kathodenkammer fließende Menge der Flüssigkeit die gesamte durch den mindestens einen weiteren Auslass fließende Menge der Flüssigkeit um ein Vielfaches, beispielsweise mehr als das 5-fache, mehr als das 10-fache, mehr als das 20-fache, mehr als das 50-fache oder sogar mehr als das 100-fache, übersteigt.

Der mindestens eine Auslass ist bevorzugt so dimensioniert, dass im Normalbetrieb die Zirkulation der Flüssigkeit nicht durch ein Lecken aus dem mindestens einen Auslass gestört wird. Ein geringfügiges Lecken aus dem mindestens einen Auslass, wodurch der Wirkungsgrad nicht spürbar beeinflusst wird, stört die Zirkulation der Flüssigkeit nicht.

Eine Dimensionierung des mindestens einen Auslasses kann insbesondere durch geeignete Dimensionierung der Radien und Längen der Auslässe erfolgen.

Ist nur ein Anodenbehältnis mit einem Auslass und einem Durchlass ausgebildet, so fließt eine größere Menge durch den Durchlass, wenn dessen Strömungswiderstand geringer ist als der Strömungswiderstand des Auslasses.

Beispielsweise kann der Durchmesser des mindestens einen Auslasses schmaler als 1mm sein oder zwischen 0,3mm und 0,8mm liegen.

Der zusätzliche Auslass kann insbesondere bei der Initialisierung der Vorrichtung von Vorteil sein. Hierauf wird an anderer Stelle noch genauer eingegangen.

Bei einer weiteren vorteilhaften Ausgestaltung kann vorgesehen sein, dass in der Anodenkammer ein Katalysator zur katalytischen Spaltung von Wasserstoffperoxid, vorzugsweise in molekularen Sauerstoff und Wasser, angeordnet ist. Bevorzugt ist der Katalysator Mangandioxid. Mit derartigen Ausgestaltungen kann in der Anodenkammer Sauerstoff erzeugt werden, welcher sodann in die Kathodenkammer und dort möglichst nah an die Kathode gebracht werden kann. Da Wasserstoffperoxid anders als molekularer Sauerstoff flüssig ist, genügen bereits kleine Mengen aus, um große Mengen Sauerstoff bereitzustellen. Eine kontrollierte Umsetzung des Wasserstoffperoxids in der Anodenkammer kann insbesondere dann gut erfolgen, wenn die Anodenkammer nicht vollständig mit einer oder der Flüssigkeit befüllt ist, während die Kathodenkammer mit der Flüssigkeit vollständig befüllt sein kann.

Erfindungsgemäß ist vorgesehen, dass ein Material der Kathode ein Katalysator zur katalytischen Spaltung von Wasserstoffperoxid in molekularen Sauerstoff und Wasser ist. Bevorzugt ist das Material der Kathode Mangandioxid. Diese Ausgestaltungen haben den Vorteil, dass die Sauerstoffverfügbarkeit an der Kathode verbessert wird. Eine hohe Sauerstoffverfügbarkeit an der Kathode ist effizienzsteigernd bei Flüssigkeiten mit niedriger Ammoniakkonzentration. In diesem Fall wandern nur wenige Elektronen von der Anode zu Kathode, sodass diese an der Kathode erschwert mit Sauerstoff in Kontakt kommen können. Eine hohe Sauerstoffverfügbarkeit erhöht die Chance eines Kontakts eines Elektrons mit einem Sauerstoffmolekül.

Der Effekt beruht auf der Erkenntnis, dass die in der Kathodenkammer befindlichen Sauerstoff-Moleküle mittels Aufnahme von Kathodenelektronen zunächst als Zwischenprodukt Wasserstoffperoxid-Moleküle bilden, die sodann durch Aufnahme weiterer Elektronen und freier Protonen zu Wasser-Molekülen reduziert werden. Die Rückbildung von Sauerstoff, die auch als Rezyklierung von Sauerstoff bezeichnet werden kann, hemmt daher die Neutralisierung eines freien Protons mit einem freien Elektron zugunsten einer Erhöhung der Dichte von Sauerstoff-Molekülen an der Kathode, was die Chance erhöht, dass ein neu eintreffendes Elektron einen Reaktionspartner an der Kathode findet. Dies wirkt sich daher positiv auf den Elektronenfluss von der Anode zur Kathode aus, was den Umsatz auch an der Anode verbessert.

Bevorzugt ist ein Material der Anode Zink. Zink fördert die Umsetzung von Ammoniak zu molekularem Stickstoff in der Anodenkammer in besonders effizienter Weise.

Bei einer weiteren vorteilhaften Ausgestaltung der Vorrichtung kann vorgesehen sein, dass die Anodenkammer mehr als ein Anodenkammermodul umfasst, wobei die Anodenkammermodule in dem Kreislauf miteinander in Reihe geschaltet sind. In dem Kreislauf in Reihe geschaltet bedeutet, dass im Betrieb die Flüssigkeit hintereinander durch die Anodenkammermodule von einem ersten zu einem letzten durchfließt, bevor sie erneut durch das erste Anodenkammermodul durchfließt. Die Anodenkammermodule werden daher im Betrieb von der Flüssigkeit nacheinander durchlaufen.

Dies kann beispielsweise dadurch erfolgen, dass die Zuleitung der Anodenkammer an einen Einlass eines erstes Anodenkammermoduls angeschlossen ist, dass das erste Anodenkammermodul eine Ausleitung hat, die mit einem Einlass eines zweiten Anodenkammermoduls verbunden ist, wobei das zweite Anodenkammermodul seinerseits eine Ausleitung hat, die mit einem Einlass eines nächsten Anodenkammermoduls verbunden ist, wobei derartige Verbindungen bis zu einem letzten Anodenkammermodul fortgesetzt werden, welches einen Durchlass hat, der den Durchlass der Anodenkammer in die Kathodenkammer bildet.

Die Anodenkammermodule können auch identisch ausgebildet sein, wobei dann die zuvor beschriebenen Ausleitungen dem Durchlass des letzten Anodenkammermoduls entsprechen. Die Reihenschaltung hat unter anderem den Vorteil, dass eine größere Fläche an Anodenmaterial erreichbar ist, sodass die Umsetzung des Ammoniaks verbessert wird. Die Modularität hat ferner den Vorteil, dass durch Anpassung der Anzahl der Anodenkammermodule die Umsetzungsrate von Ammoniak zu molekularem Stickstoff anpassbar ist.

Ein Anodenkammermodul kann beispielsweise ein Anodenbehältnis umfassen. Ein Anodenkammermodul kann alternativ auch ein Rohrabschnitt sein. Mehrere Anodenkammermodule können im letzteren Fall dadurch hintereinander geschaltet werden, dass die Rohrabschnitte miteinander verbunden werden, beispielsweise unter Verwendung von Flanschen.

Bevorzugt liegen die Anoden der in Reihe geschalteten Anodenkammermodule auf einem gleichen elektrischen Potential. Dies kann beispielsweise durch eine elektrische Parallelschaltung der Anoden erreicht werden.

Bei einer weiteren vorteilhaften Ausgestaltung kann vorgesehen sein, dass in unmittelbarer Nähe zur Kathode eine Zuleitung ausgebildet ist. Hierdurch kann bewirkt werden, dass Wasserstoffperoxid oder molekularer Sauerstoff bei mit der Flüssigkeit befüllten Kathodenkammer im Betrieb unmittelbar und direkt an die Kathode gebracht wird. Bevorzugt ist die Zuleitung durch einen Auslass der Anodenkammer, vorzugsweise durch den bereits zuvor erwähnten Auslass der Anodenkammer, der einen erhöhten Strömungswiderstand aufweist, gegeben. Die Zuleitung kann allerdings auch direkt in die Kathodenkammer hineinreichen und direkt in dieser angeordnet sein mit geeigneten Öffnungen in unmittelbarer Nähe zur Kathode. Diese Ausgestaltungen haben den Vorteil, dass die Sauerstoffverfügbarkeit an der Kathode erhöht werden kann. Wasserstoffperoxid und/oder molekularer Sauerstoff werden unmittelbar und direkt an die Kathode gebracht, wenn sie nicht erst über Diffusion zu der Kathode gelangen, sondern wenn sie infolge des Ausströmens aus der Zuleitung direkt auf die Kathode geleitet werden.

Bei einer weiteren vorteilhaften Weiterbildung der erfindungsgemäßen Vorrichtung kann vorgesehen sein, dass ein Messsensor so angeordnet ist, dass mit ihm im Betrieb eine Eigenschaft der Flüssigkeit messbar ist. Bevorzugt handelt sich bei der Eigenschaft um eine Sauerstoffkonzentration, einen pH-Wert und/oder eine Ammoniakkonzentration. Der Messsensor kann grundsätzlich an jeder Stelle des Kreislaufs angeordnet sein, welche im Betrieb von der zirkulierenden Flüssigkeit durchströmt wird. Bevorzugt ist der Messsensor in der Kathodenkammer angeordnet. Es können auch mehrere Messsensoren vorgesehen sein.

Um für den laufenden Betrieb der Vorrichtung umweltschonend Wasserstoffperoxid und/oder molekularen Sauerstoff synthetisieren zu können und um so die Effizienz der Ammoniakumwandlung erhöhen zu können, kann bei einer weiteren vorteilhaften Ausgestaltung der Vorrichtung vorgesehen sein, dass eine Sauerstoff-Erzeugungseinheit an den Kreislauf angeschlossen ist, wobei die Sauerstoff-Erzeugungseinheit eine Photozelle umfasst. Hierdurch wird eine Anordnung aus der erfindungsgemäßen Vorrichtung zur Umwandlung von Ammoniak aus einer Ammoniak enthaltenden wässrigen Flüssigkeit in molekularen Stickstoff und aus einer Sauerstoff-Erzeugungseinheit geschaffen, wobei die die Photozelle umfassende Sauerstoff-Erzeugungseinheit an den Kreislauf angeschlossen ist. Die Photozelle weist bevorzugt einen Hohlkörper mit lichtdurchlässiger Wandung auf. Besonders bevorzugt ist die Photozelle im sichtbaren Licht und/oder im Spektrum des Sonnenlichts lichtdurchlässig. Weiter sind bevorzugt in der Photozelle eine Vielzahl von photosensiblen Partikeln in einer Wasser enthaltenden Photozellenflüssigkeit suspendiert. Bevorzugt weist ein photosensibles Partikel ein Trägerelement auf, auf dem ein Material mittels eines Haftmittels anhaftet, wobei das Material lichtaktive Farbstoffmoleküle enthält.

Besonders bevorzugt enthält das Material Pflanzenblattpolymere von abgestorbenen und abgestoßenen Herbstblättern.

Die lichtaktiven Farbstoffmoleküle können durch entsprechende Lichteinstrahlung angeregt werden. Dies kann dazu führen, dass Elektronen und Protonen auf Nachbarmoleküle übertragen werden. Handelt es sich bei dem Nachbarmolekül um molekularen Sauerstoff kann dies dazu führen, dass Wasserstoffperoxid gebildet wird. Sind die Farbstoffmoleküle in einem Huminstoff-Tonmineralkomplex eingebunden, können Radikale erzeugt werden. Beispielsweise kann ein als Hyperoxid-Anion erzeugtes Radikal einen Protonentransfer auf ein Übergangsmetall wie etwa Eisen oder Kupfer, die in dem Huminstoff-Tonmineralkomplex eingebunden sind, auslösen, wodurch molekularer Sauerstoff aus dem Huminstoff-Tonmineralkomplex abgespalten werden kann, der sodann zu Wasserstoffperoxid umgewandelt werden kann. Im Ergebnis kann so mit der Photozelle Wasserstoffperoxid und in Wasser gelöster Sauerstoff erzeugt werden.

Die Photozelle ist bevorzugt im sichtbaren Licht, insbesondere im Spektrum des Sonnenlichts sensitiv. Es kann eine entsprechende künstliche Lichtquelle ausgebildet sein. Alternativ kann die Sonne als Lichtquelle verwendet werden.

Bevorzugt ist die Photozelle in einem eigenen Sauerstoff-Erzeugungskreislauf für die Photozellenflüssigkeit eingebunden. Eine Pumpe kann in dem Sauerstoff-Erzeugungskreislauf angeordnet sein. Die Pumpe kann den nötigen Antrieb für die Zirkulation der Photozellenflüssigkeit in dem Sauerstoff-Erzeugungskreislauf bewirken. Es kann ein Wassertank ausgebildet sein, mit dem Wasser in den Sauerstoff-Erzeugungskreislauf zuführbar ist.

Die Sauerstoff-Erzeugungseinheit kann eine Zuleitung zu dem Kreislauf der Ammoniak enthaltenden Flüssigkeit haben, sodass Wasserstoffperoxid und/oder Sauerstoff in den Kreislauf einbringbar ist. Die Zuleitung kann beispielsweise an dem eingangs genannten Einlass angeschlossen sein.

Das Trägerelement hat bevorzugt einen maximalen Durchmesser von 1cm, noch bevorzugter zwischen 100 Mikrometer und 0,5 cm, besonders bevorzugt zwischen 0,5 mm und 3mm, ganz besonders bevorzugt zwischen 1 mm und 2 mm.

Das Trägerelement kann grundsätzlich beliebig geformt sein, bevorzugt ist eine Kugelform.

Bevorzugt ist das Trägerelement aus einem Kunststoff. Bevorzugt ist das Trägerelement ein Mikroplastikpartikel. Das Mikroplastikpartikel kann aus primärem oder sekundärem Plastik gefertigt sein.

Es kann vorgesehen sein, dass das Haftmittel einen Schleimstoff umfasst. Der Schleimstoff enthält bevorzugt ein Polysaccharid. Der Schleimstoff kann ein Mucin sein. Der Schleimstoff kann menschlicher, tierischer oder pflanzlicher Schleim sein. Der Schleimstoff kann auch ein Speichelersatzprodukt wie etwa Hyaluronsäure sein.

Bevorzugt ist vorgesehen, dass das Haftmittel das Trägerelement einhüllt.

Das Material kann eine nicht lebende, insbesondere tote, organische Substanz umfassen. Das Material kann insbesondere einen Humusbestandteil und/oder ein Tonmineral umfassen. Der Humusbestandteil ist bevorzugt ein Huminstoff. Tonminerale können mit Huminstoffen besonders vorteilhafte Komplexe bilden.

Ein Tonmineral ist bevorzugt ein Mineral mit einer durchschnittlichen Korngröße unterhalb von 5 Mikrometer, bevorzugt unterhalb von 2 Mikrometer.

Humus kann in geeigneten Lagen eine hohe Dichte an lichtaktiven Farbstoffmolekülen aufweisen. Für die Erfindung geeignet sind Lagen, in denen der Humus darüber hinaus einen hohen Anteil an Lignin- und Polyphenolfragmenten und darin integrierte lichtaktive Farbstoffmoleküle aufweist.

Als besonders vorteilhaft erweist sich, wenn das Material Pflanzenblattpolymere aufweist. Eine besonders vorteilhafte Struktur bildet das Pflanzenblattpolymer des gealterten, insbesondere in den Herbstmonaten September und Oktober rückgebaute, abgestoßene und abgestorbene Blatt von Laubbäumen. Besonders vorteilhaft ist das Pflanzenblattpolymer von Pflanzen der Pflanzenfamilie zweikeimblättriger Angiospermen, insbesondere mit einem Celluloseanteil von 15-50%, Hemicelluloseanteil von 3-50% und/oder Ligninanteil von 7-10%. Das Pflanzenblattpolymer des abgestorbenen Blatts von Laubbäumen kann eine hohe Konzentration unterschiedlicher Farbstoffmoleküle aufweisen.

Das Material, welches die lichtaktiven Farbstoffmoleküle enthält, kann beispielsweise erhalten werden, indem nicht lebende, insbesondere tote, organische Substanz isoliert und/oder bereitgestellt wird. Bevorzugt wird Pflanzenblattpolymer, vorzugsweise von Herbstblättern oder von Blättern wie zuvor beschrieben, bereitgestellt. Die Bereitstellung des Pflanzenblattpolymers oder des das Pflanzenblattpolymer enthaltende Pflanzenblattmaterial kann in vollständig oder teilweise getrockneter Form erfolgen. Besonders bevorzugt beträgt dessen Pflanzenfarbstoffanteil mindestens 1% und/oder dessen Lignin-Massenanteil mehr als 1% in Trockensubstanz und/oder dessen Massenanteil von einem Chlorophyllabbauprodukt non-fluorescent chlorophyll catabolites (NCC) zwischen 0,6% bis 1,2% in Trockensubstanz am Gesamtanteil des Pflanzenblattmaterial.

Bevorzugt ist das Pflanzenblattmaterial, insbesondere das getrocknete und/oder zerkleinerte Pflanzenblattmaterial, mit Tonmineralen vermischt. Bevorzugt beträgt der Massenanteil des Pflanzblattmaterials zwischen 60% und 99%, der Massenanteil der Tonminerale zwischen 1% und 20% und der Massenanteil von Wasser und/oder der Massenanteil eines weiteren Materials zwischen 0% und 20%. Die Massenanteile beziehen sich auf die Mischung, die einen Massenanteil von 100% hat.

Es kann vorgesehen sein, dass das die lichtaktiven Farbstoffmoleküle enthaltende Material mit dem Haftmittel vermischt ist. Bevorzugt hat das Material einen Massenanteil zwischen 80% und 99%, das Haftmittel einen Massenanteil zwischen 1% und 10%. Ferner kann Wasser zugemischt sein mit einem Massenanteil zwischen 0% und 10%. Insgesamt sind die zuvor genannten Massenanteile jeweils bezogen auf eine Masse des Gemischs, das einen Massenanteil von 100% hat.

Es kann vorgesehen sein, dass dieses Material-Haftmittel-Gemisch mit den Trägerelementen vermischt ist. Hierdurch können die Trägerelemente von dem Haftmittel umhüllt werden. Bevorzugt werden die Viskosität des Haftmittels und/oder das Volumenverhältnis der Trägerelemente zu dem Material-Haftmittel-Gemisch bei dem Vermischen so eingestellt, dass die äußere Oberfläche der Umhüllung höchstens 10%, vorzugsweise höchstens 5%, größer ist als die Oberfläche des umhüllten Trägerelements.

Zur Lösung der genannten Aufgabe sind erfindungsgemäß die Merkmale des auf ein Verfahren zur Umwandlung von Ammoniak gerichteten nebengeordneten Anspruchs 11 vorgesehen. Insbesondere wird zur Lösung der genannten Aufgabe somit erfindungsgemäß bei einem Verfahren zur Umwandlung von Ammoniak aus einer Ammoniak enthaltenden wässrigen Flüssigkeit in molekularen Stickstoff vorgeschlagen, dass eine Vorrichtung verwendet wird, die erfindungsgemäß, insbesondere wie zuvor beschrieben und/oder nach einem der auf eine Vorrichtung zur Umwandlung von Ammoniak aus einer Ammoniak enthaltenden wässrigen Flüssigkeit in molekularen Stickstoff gerichteten Schutzansprüche, ausgebildet ist, und dass die in dem Kreislauf zirkulierende Flüssigkeit mehrfach durch die Vorrichtung geleitet wird. Das mehrfache Durchleiten der Flüssigkeit durch die Vorrichtung ermöglicht es, die Ammoniakkonzentration in der Flüssigkeit kontinuierlich und kontrolliert auf eine gewünschte Konzentration zu reduzieren.

Zugleich kann durch das Verfahren elektrische Energie erzeugt werden. So entsteht eine Spannung zwischen der Anode und der Kathode, welche genutzt werden kann, um einen Verbraucher mit Energie zu versorgen oder um einen Energiespeicher aufzuladen.

Damit die Flüssigkeit in der Vorrichtung zirkulieren kann, kann vorgesehen sein, dass ein Ventil, mit dem der Durchlass verschließbar ist, geöffnet ist. Das Ventil kann beispielsweise das bereits zuvor erwähnte Ventil sein.

Es kann vorgesehen sein, dass die Flüssigkeit eine niedrige Ammoniak-Ausgangskonzentration hat.

Bei einer vorteilhaften Ausgestaltung des Verfahrens kann vorgesehen sein, dass zur Initialisierung die Kathodenkammer mit der Flüssigkeit befüllt wird und dass über die Zuleitung der Anodenkammer Wasserstoffperoxid und/oder in Wasser gelöster Sauerstoff in die Anodenkammer eingeleitet wird. Bevorzugt wird die Initialisierung beendet, sobald in der Flüssigkeit ein Initialisierungs-Sauerstoffkonzentrationsschwellwert erreicht wird. Die Sauerstoffkonzentration kann mit einem Sauerstoffkonzentrationsmesssensor gemessen werden. Das in die Anodenkammer eingeleitete Wasserstoffperoxid gelangt in die Kathodenkammer, sodass der Sauerstoffgehalt in der Flüssigkeit erhöht wird. Hierdurch kann die anschließend beginnende Umwandlungsrate des Ammoniaks in molekularen Stickstoff signifikant erhöht werden.

Die Zuleitung des Wasserstoffperoxids und/oder des gelösten Sauerstoffs erfolgt bevorzugt, bevor die Ammoniak enthaltende Flüssigkeit in die Anodenkammer eingeleitet wird. Hierdurch kann noch vor dem regulären Betrieb eine optimale Sauerstoffkonzentration in der nachfolgend zirkulierenden Flüssigkeit eingestellt werden.

Ist in der Anodenkammer ein Katalysator zur katalytischen Spaltung von Wasserstoffperoxid angeordnet, kann aus einer geringen Menge flüssigen Wasserstoffperoxids eine große Menge molekularer Sauerstoff bereitgestellt werden. Da der Sauerstoff in die Gasphase übergeht, erhöht sich so der Druck in der Anodenkammer und das Sauerstoffgas kann mit hoher Geschwindigkeit in die Kathodenkammer gedrückt werden. Die entstehende Gasströmung kann hierbei flüssiges Wasserstoffperoxid mitnehmen und gleichsam in die Kathodenkammer drücken.

Weist die Anodenkammer einen oder mehrere Auslässe wie zuvor beschrieben auf, können durch diese der Sauerstoff nah an die Kathode gebracht werden, wo der Sauerstoff abhängig von der Ausgestaltung der Kathode rezyklieren kann. Die so entstehende hohe Sauerstoffkonzentration an der Kathode kann dazu führen, dass im anschließenden Normalbetrieb eine maximale Umsetzung des Ammoniaks bereits nach wenigen Minuten erreicht wird, wobei ohne entsprechende Initialisierung das Erreichen einer maximalen Umsetzungsrate mehrere Stunden dauern kann.

Bevorzugt ist vorgesehen, dass zur Initialisierung ein Ventil am Durchlass der Anodenkammer, beispielsweise das bereits zuvor erwähnte Ventil, geschlossen wird. Hierdurch kann erreicht werden, dass der Sauerstoff durch einen oder mehrere an der Anodenkammer ausgebildete Auslässe kontrolliert in die Kathodenkammer geleitet werden kann.

Bevorzugt ist vorgesehen, dass mit oder nach Beendigung der Initialisierung das Ventil geöffnet und der Flüssigkeitskreislauf aktiviert wird, indem die Pumpe angeschaltet wird, sodass die Flüssigkeit über die Zuleitung in die Anodenkammer eingeleitet wird.

Erfindungsgemäß ist vorgesehen, dass Wasserstoffperoxid und/oder in Wasser gelöster Sauerstoff der in dem Kreislauf zirkulierenden Flüssigkeit zugefügt wird. Bevorzugt wird eine Sauerstoffkonzentration in der Flüssigkeit gemessen und ein Zufügen erfolgt bei Unterschreiten eines unteren Sauerstoffkonzentrationsschwellwerts. Ein am Durchlass ausgebildetes Ventil bleibt hierbei bevorzugt geöffnet. Hierdurch kann erreicht werden, dass im Normalbetrieb, in dem die Flüssigkeit zirkuliert, die Sauerstoffsättigung in der Flüssigkeit immer hoch genug ist, um eine optimale Umwandlungsrate des Ammoniaks zu erzielen.

Bevorzugt ist vorgesehen, dass das Wasserstoffperoxid und/oder der in Wasser gelöste Sauerstoff aus einer Sauerstoff-Erzeugungseinheit zugeführt wird, wie sie zuvor beschrieben worden ist.

Bei einer weiteren Ausgestaltung des Verfahrens kann vorgesehen sein, dass eine Ammonium- und/oder Ammoniakkonzentration gemessen wird und dass bei Unterschreiten eines unteren Ammonium- und/oder Ammoniackonzentrationsschwellwerts die gesamte Flüssigkeit oder ein Teil von ihr dem Kreislauf entnommen wird. Dies erfolgt bevorzugt über die Entnahmeöffnung.

Es kann vorgesehen sein, dass die Vorrichtung so betrieben wird, dass die Flüssigkeit immer vollständig ausgetauscht wird. Alternativ kann auch vorgesehen sein, dass schrittweise oder kontinuierlich noch unbehandelte Flüssigkeit zugefügt wird und dann nach Erreichen einer hinreichend niedrigen Ammonium- und/oder Ammoniakkonzentration vollständig entnommen wird.

Möglich ist auch ein vollständig kontinuierlicher Betrieb, bei dem die Flüssigkeit mit konstanter Rate entnommen wird. Unter idealen Bedingungen und/oder optimaler Prozesssteuerung kann sich dann ein Gleichgewicht für die Ammoniakkonzentration in der zirkulierenden Flüssigkeit einstellen, wobei die Konzentration einstellbar ist, indem die Entnahmerate gesteuert wird.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Schutzansprüche untereinander und/oder mit einzelnen oder mehreren Merkmalen der Ausführungsbeispiele und/oder der zuvor beschriebenen Varianten erfindungsgemäßer Vorrichtungen und Verfahren.

Es zeigt:
- Fig. 1: eine Kathodenkammer mit darin angeordneten Anodenkammermodulen des in Fig. 2 und Fig. 3 vollständig dargestellten Ausführungsbeispiels einer erfindungsgemäßen Vorrichtung zur Umwandlung von Ammoniak aus einer Ammoniak enthaltenden wässrigen Flüssigkeit in molekularen Stickstoff,
- Fig. 2: ein Ausführungsbeispiel einer erfindungsgemäß ausgebildeten Vorrichtung zur Umwandlung von Ammoniak aus einer Ammoniak enthaltenden wässrigen Flüssigkeit, welches gerade für den Regulärbetrieb initalisiert wird,
- Fig. 3: die Vorrichtung gemäß Fig. 2 im Normalbetrieb,
- Fig. 4: ein alternatives Ausführungsbeispiel einer erfindungsgemäß ausgebildeten Vorrichtung mit einer Sauerstoff-Erzeugungseinheit,
- Fig. 5: ein photosensibles Partikel für eine Sauerstoff-Erzeugungseinheit gemäß Fig. 4.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

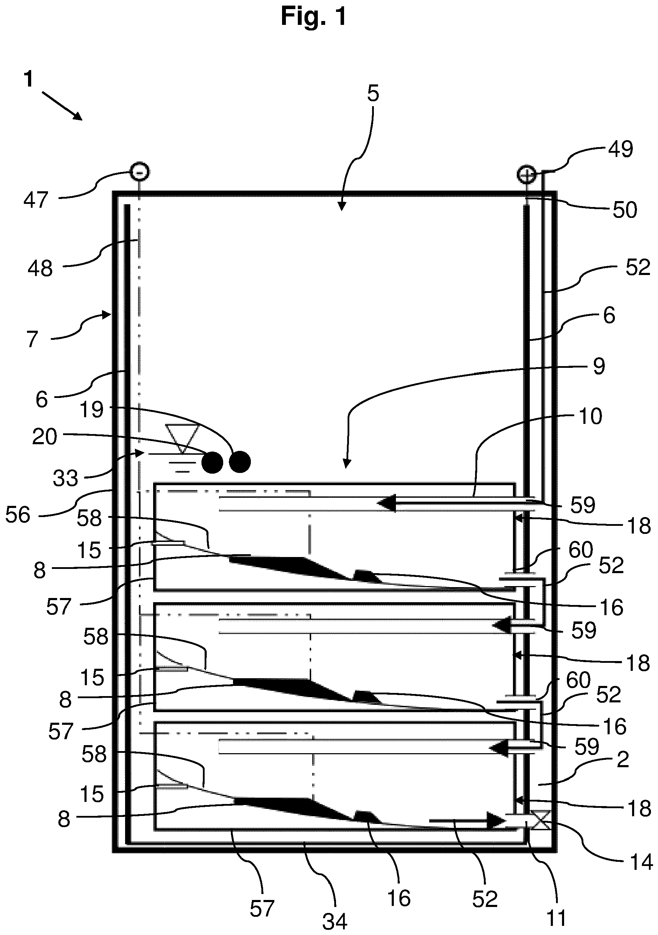

Fig. 1 bis Fig. 3 zeigen ein erstes Ausführungsbeispiel einer erfindungsgemäß ausgebildeten Vorrichtung 1 zur Umwandlung von Ammoniak aus einer Ammoniak enthaltenden wässrigen Flüssigkeit 2 in molekularen Stickstoff. Bei der Flüssigkeit kann es sich um eine Reststoffflüssigkeit handeln, wie etwa ein Gärprodukt aus einer Biogasanlage, dessen Feststoffbestandteile weitgehend abgeschieden worden sind.

Die Vorrichtung 1 umfasst eine Kathodenkammer 7. Die Kathodenkammer 7 weist ein Behältnis 56 mit undurchlässiger Wandung auf. Das Behältnis 56 kann oberseitig mit einem abnehmbaren Deckel versehen sein, sodass oberseitig eine Entnahmeöffnung 5 zur Entnahme von in dem Behältnis 56 befindlicher Flüssigkeit 2 ausgebildet sein kann.

Zusätzlich oder alternativ kann in einem alternativen Ausführungsbeispiel eine Entnahmeöffnung 5 auch an dem Behältnis 56 ausgebildet sein, indem dieses einen Abfluss hat, welcher mit einem Ventil verschließbar sein kann.

In der Kathodenkammer 7 ist auf beiden Seiten des Behältnisses 56 jeweils eine Kathode 6 mit Mangandioxid als Kathodenmaterial angeordnet. Die Kathoden 6 sind über eine elektrische Verbindung 34 elektrisch miteinander verbunden.

Innerhalb der Kathodenkammer 7, insbesondere innerhalb des Behältnisses 56 der Kathodenkammer 7, ist die Anodenkammer 9 angeordnet. Die Anodenkammer 9 weist mehrere Anodenkammermodule 18 auf, welche miteinander in Reihe geschaltet sind. Die Anodenkammermodule 18 haben jeweils ein Behältnis 57 mit undurchlässiger Wandung. Für die Reihenschaltung hat jedes Anodenkammermodul 18, und insbesondere jedes Behältnis 57, einen Einlass 18 und eine Ausleitung 60. Die Ausleitung 60 ist mit dem Einlass 59 des jeweils nächsten Anodenkammermoduls 18 über einen Leitung verbunden.

Eine Zuleitung 10 ist an einen Einlass 59 des ersten Anodenkammermoduls 18 angeschlossen, sodass Flüssigkeit 2 in die Anodenkammer 9 geleitet werden kann. Die Ausleitung 60 des letzten Anodenkammermoduls 18 bildet einen Durchlass 11 in die Kathodenkammer 7. Flüssigkeit 2, die über die Zuleitung 10 in die Anodenkammer 9 geleitet wird, passiert daher hintereinander die einzelnen Anodenkammermodule 18 und tritt am Durchlass 11 der Anodenkammer 9 in die Kathodenkammer 7 ein.

Die Kathodenkammer 7 ist bis zu einem Füllstand 33 mit der Flüssigkeit 2 befüllt. Die Kathodenkammer 7 hat eine Ausleitung 12, über die die von der Anodenkammer 9 in die Kathodenkammer 7 eingeleitete Flüssigkeit wieder ausgeleitet werden kann.

Die Ausleitung 12 ist über eine Pumpe 13 mit dem Zugang 10 der Anodenkammer 9 leitungsverbunden, sodass die Flüssigkeit 2 in einem Kreislauf 3 zirkulieren kann. Ein sich ausbildender Flüssigkeitsstrom 52 ist in den Zeichnungen eingezeichnet. Die Pfeile zeigen die Strömungsrichtung an. Die Pumpe 13 pumpt die Flüssigkeit 2 aus der Kathodenkammer 7 heraus und in die Anodenkammer 9 hinein. Die Flüssigkeit 2 strömt durch den Durchlass 11 wieder in die Kathodenkammer 7, wo sie erneut von der Pumpe 13 in die Anodenkammer 9 gepumpt wird. Bei geöffnetem Ventil 14 am Durchlass 11 entsteht so ein Flüssigkeitskreislauf, bei dem die Flüssigkeit 2 die Vorrichtung 1 mehrfach durchläuft. Die Pumpe 13, aber auch die weiteren zuvor genannten Bauteile, welche wie zuvor beschrieben einen Flüssigkeitskreislauf ermöglichen, wie etwa die Kathoden- und die Anodenkammer 7, 9, die Zu- und Ausleitung 10, 12, der Durchlass 11 oder auch das Ventil 14, bilden Einrichtungen zur Zirkulation der Flüssigkeit in dem Kreislauf.

In jedem der Anodenkammermodule 18 ist jeweils eine Anode 8 angeordnet. Als Anodenmaterial ist Zink vorgesehen. Streicht die Ammoniak enthaltende Flüssigkeit 2 an den Anoden 8 entlang, reagiert das Ammoniak mit Hydroxidionen und bildet Wasser und molekularen Stickstoff. Außerdem werden Elektronen freigesetzt, die zu der Kathode 6 wandern, welche mit den elektrisch parallelgeschalteten Anoden 8 über elektrische Leitungen 48, 50 miteinander elektrisch verbunden sind. An der Kathode 6 können die Elektronen sodann mit in der Flüssigkeit 2 gelöstem molekularen Sauerstoff reagieren und durch die Aufnahme von freien Protonen kann Wasser gebildet werden.

Die Reaktionen an den Anoden 8 und Kathoden 6 führen somit zu einer Potenzialdifferenz zwischen Anode 8 und Kathode 6, sodass elektrische Energie erzeugt werden kann. Mit der erzeugten elektrischen Energie kann ein Verbraucher 51 mit elektrischer Energie versorgt werden. Die Anode 8 bildet hierbei den Minuspol 47, während die Kathode den Pluspol 49 bildet.

In der Kathodenkammer 7 sind Messsensoren 19, 20 angeordnet, die in die Flüssigkeit 2 eintauchen. Der Messsensor 19 kann beispielsweise ein Messsensor 19 sein, mit dem eine Sauerstoffkonzentration in der Flüssigkeit 2 gemessen werden kann. Der Messsensor 20 kann beispielsweise ein Messsensor 20 sein, mit dem eine Ammoniakkonzentration in der Flüssigkeit 2 gemessen werden kann.

Die Anodenkammermodule 18, insbesondere deren Behältnisse 57, haben dem Zugang 10 und dem Durchfluss 11 gegenüberliegend jeweils einen Auslass 15. Die Auslässe 15 sind so dimensioniert, insbesondere so schmal dimensioniert, dass im regulären Betrieb die durch den Durchlass 11 in die Kathodenkammer 7 fließende Flüssigkeitsmenge um ein Vielfaches größer ist als die gesamte Menge an Flüssigkeit 2, die durch sämtliche Auslässe 15 in die Kathodenkammer 7 fließt. Der Auslass 15 ist in einem Anodenbehältnis 57 weiter oben angeordnet als die jeweilige Ausleitung 60. Die Auslässe 15 sind unmittelbar an der Kathode 6 angeordnet, sodass Wasserstoffperoxid oder molekularer Sauerstoff, der durch einen Auslass 15 strömt, unmittelbar und direkt an die Kathode 6 gelangen kann.

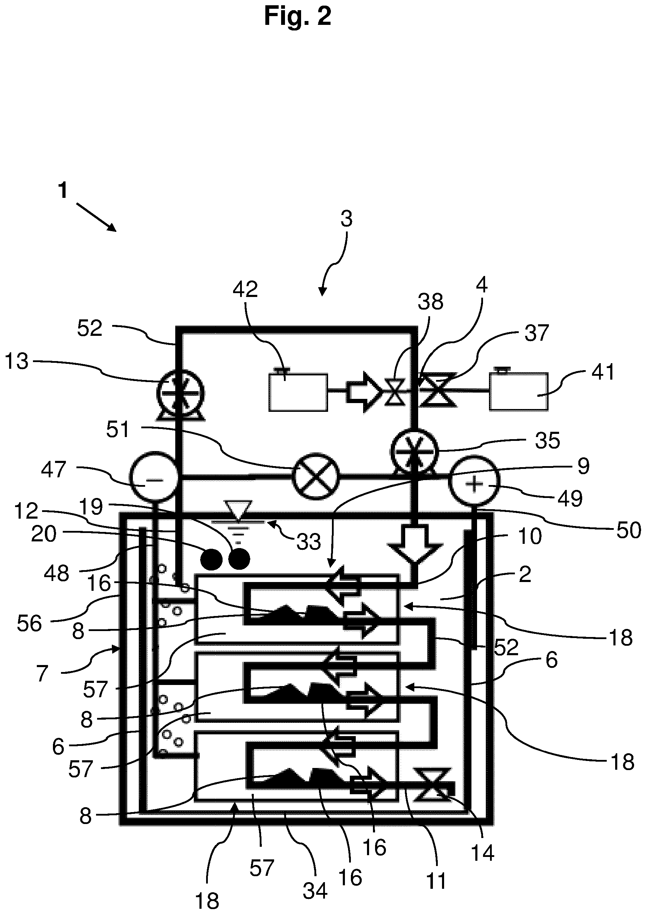

Die Auslässe 15 sind vor allem bei der Initialisierung der Vorrichtung 1 wichtig, die bereits oben genauer beschrieben ist und die in Fig. 2 illustriert ist. Dort ist gezeigt, dass die Vorrichtung 1 einen Einlass 4 hat, mit dem die Flüssigkeit 2 in den Kreislauf 3 zugefügt werden kann. Ein Tank 41 ist mit der Flüssigkeit 2 befüllt, die eine Ammoniakausgangskonzentration von beispielsweise 800mg je Liter aufweist. Der Tank 41 ist mit dem Einlass 4 leitungsverbunden, wobei die Zuleitung durch ein Ventil 37 verschließbar ist. Für die Initialisierung der Vorrichtung 1 wird bei geöffnetem Ventil 37 die Kathodenkammer 7 bis zu dem Füllstand 33 befüllt. Sodann wird das Ventil 37 geschlossen.

Ein weiterer Tank 42 ist mit Wasserstoffperoxid befüllt. Der Tank 42 ist mit dem Einlass 4 über ein Ventil 38 leitungsverbunden. Dieses Ventil 38 ist zunächst geschlossen. Nach Befüllen der Kathodenkammer 7 mit der Flüssigkeit 2 werden das Ventil 14 geschlossen und das Ventil 38 geöffnet, sodass mittels eingeschalteter Pumpe 35 Wasserstoffperoxid über den Einlass 4 und die Zuleitung 10 zunächst in das erste Anodenkammermodul 18 der Anodenkammer 9 fließt. In jedem Anodenkammermodul 18 befindet sich auf einem schrägen Zwischenboden 58 eine Kontaktfläche eines Katalysators 16 aus Mangandioxid. Das Wasserstoffperoxid wird durch das Mangandioxid katalytisch in molekularen Sauerstoff umgewandelt. Dabei vergrößert sich das Volumen sehr stark, da Wasserstoffperoxid flüssig ist und molekularer Sauerstoff gasförmig ist. Der Druck in dem Anodenkammermodul 18 steigt und der Sauerstoff wird aus dem Auslass 15 herausgedrückt und an die Kathode 6 geleitet. Hierbei kann auch Wasserstoffperoxid mitgerissen werden und gelangt auf diesem Weg über den Auslass 15 direkt an die Kathode 6. Der Sauerstoffgehalt in der Flüssigkeit 2 kann mit dem Sauerstoffkonzentrationsmesssensor 19 gemessen werden. Sobald eine gewünschte Konzentration erreicht ist. Ist diese Konzentration erreicht, ist die Initialisierungsphase abgeschlossen und die Vorrichtung 1 kann im regulären Betriebsmodus betrieben werden.

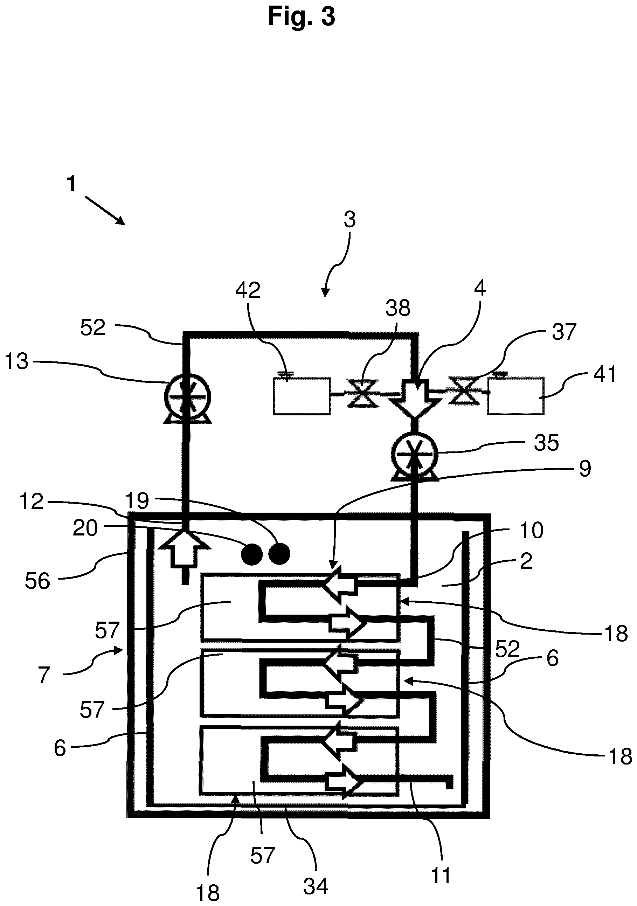

Der reguläre Betriebsmodus ist weiter oben genauer beschrieben und in Fig. 3 illustriert. Die Ventile 37, 38 sind oder werden geschlossen, das Ventil 14 wird geöffnet. Die Pumpe 13 wird aktiviert, sodass die Flüssigkeit 2 beginnt, einen Flüssigkeitsstrom 52 auszubilden und durch die Vorrichtung 1 in dem Kreislauf 3 zu zirkulieren. Die Reaktionen an Anode 8 und Kathode 6 setzen ein. Die hohe initiale Sauerstoffkonzentration an der Kathode 6 und die Sauerstoffrezyklierung aufgrund des verwendeten Mangandioxids als Kathodenmaterial führen dazu, dass die Ammoniakumsetzungsrate schnell einen hohen Betriebswert erreicht. Der gebildete molekulare Stickstoff kann beispielsweise durch eine Entlüftungsmöglichkeit nach oben in der Kathodenkammer 7 in die Atmosphäre entweichen oder anderweitig aufgefangen werden.

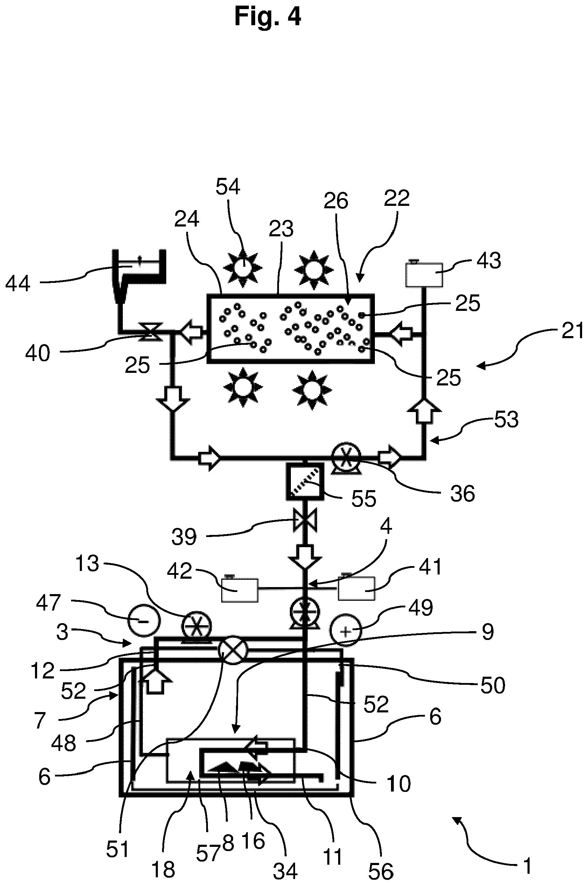

Im regulären Betrieb kann die Sauerstoffkonzentration mittels des Sensors 19 überprüft werden. Sinkt diese unter einen kritischen Wert, kann das Ventil 38 geöffnet werden, sodass Wasserstoffperoxid der weiter zirkulierenden Flüssigkeit 2 über den Einlass 4 zugefügt wird. Alternativ kann Wasserstoffperoxid und in Wasser gelöster molekularer Sauerstoff auch über eine Sauerstoff-Erzeugungseinheit 21 über den Einlass 4 der zirkulierenden Flüssigkeit 2 zugefügt werden, vgl. das als nächstes beschriebene Ausführungsbeispiel gemäß Fig. 4.

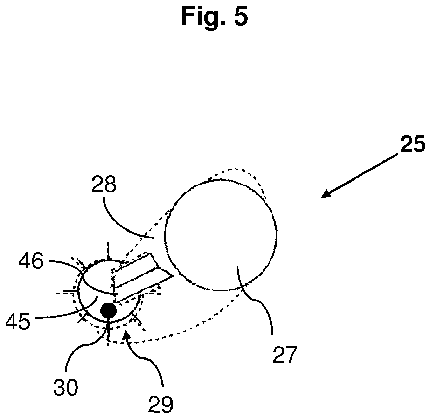

Fig. 4 zeigt ein zweites Ausführungsbeispiel einer erfindungsgemäß ausgebildeten Vorrichtung 1 zur Umwandlung von Ammoniak aus einer Ammoniak enthaltenden wässrigen Flüssigkeit 2 in molekularen Stickstoff mit einer Sauerstoff-Erzeugungseinheit 21, welche eine Photozelle 22 mit photosensiblen Partikeln 25 umfasst, von denen eines in Fig. 5 schematisch dargestellt ist. Die Vorrichtung 1 ist grundsätzlich wie die in Fig. 1 bis Fig. 3 gezeigte Vorrichtung 1 ausgebildet. Allerdings hat die Anodenkammer 9 nur ein einzelnes Anodenbehältnis 57. Außerdem ist zusätzlich eine Sauerstoff-Erzeugungseinheit 21 vorgesehen. Eine solche kann unabhängig davon verwendet werden, wieviele Anodenkammermodule 18 bzw. Anodenbehältnisse 57 die Anodenkammer 9 hat.

Die Sauerstoff-Erzeugungseinheit 21 ist über einen Filter 55 und ein Ventil 39 mit dem Einlass 4 leitungsverbunden, sodass Flüssigkeit aus der Sauerstoff-Erzeugungseinheit 21 in den Kreislauf 3 eingeleitet werden kann.

Die Sauerstoff-Erzeugungseinheit 21 hat eine Photozelle 22 mit einem Hohlkörper 23, der eine für Licht im Spektrum des Sonnenlichts lichtdurchlässige Wandung 24 hat. In dem Hohlkörper 23 sind eine Vielzahl von photosensiblen Partikeln 25 angeordnet.

Ein solches photosensibles Partikel 25 ist in Fig. 5 gezeigt. Das Partikel 25 hat ein Trägerelement 27, das ein Mikroplastikpartikel sein kann. Das Trägerelement 27 ist von einem Haftmittel 28 umgeben, in dem ein Material 29 eingebettet ist, das lichtaktive Farbstoffmoleküle 30 enthält. Die lichtaktiven Farbstoffmoleküle 30 sind in dem in Fig. 5 gezeigten Ausführungsbeispiel in einem Komplex aus Huminstoff 45 und Tonmineral 46 eingebettet. In der Abbildung ist lediglich ein einzelner Komplex 45, 46 und ein lichtaktives Farbstoffmolekül 30 stark vergrößert und schematisch explizit gezeichnet. In Wirklichkeit sind eine sehr große Anzahl von Huminstoffmolekülen, Tonmineralteilchen und Farbstoffmolekülen 30 vorhanden. Ist ein solches photosensibler Partikel 25 in einer Photozellenflüssigkeit 26, bei der es sich um Wasser handeln kann, suspendiert, kann eine Anregung der lichtaktiven Farbstoffmoleküle 30 dazu führen, dass sich Radikale bilden, die Sauerstoff aus dem Huminstoff-Tonmineralkomplex herauslösen. Ferner kann die Anregung der Farbstoffmoleküle 30 dazu führen, dass der herausgelöste Sauerstoff in Wasserstoffperoxid umgewandelt wird oder dass molekularer Sauerstoff in der Photozellenflüssigkeit 26 gelöst wird.

Die Photozelle 22 ist in einen Sauerstoff-Erzeugungskreislauf 53 integriert. Die Photozellenflüssigkeit 26 kann mittels einer Pumpe 36 und einem einen Kreislauf bildenden Leitungssystem in eine Zirkulation versetzt werden. Mit Wasserstoffperoxid und/oder molekularem Sauerstoff angereicherter Photozellenflüssigkeit 26 kann über das Ventil 39 der zirkulierenden, Ammoniak enthaltenden Flüssigkeit zugeführt werden oder direkt in die Anodenkammer 9 eingeleitet werden. Die fehlende Photozellenflüssigkeit 26 kann ersetzt werden mittels eine über ein Ventil 40 angeschlossenen Tanks 44, der mit Photozellenflüssigkeit 26, vorzugsweise mit Wasser, befüllt ist. Überschüssige, mit Wasserstoffperoxid und mit Sauerstoff angereicherte Photozellenflüssigkeit 26 kann alternativ auch in einen Tank 43 für eine spätere Verwendung geleitet und dort zwischengelagert werden. Als Lichtquelle 54 kann Sonnenlicht verwendet werden. Alternativ kann auch eine künstliche Lichtquelle 54 verwendet werden, die Licht in einem für die Photozelle 22 geeigneten Wellenlängenbereich erzeugt.

Weitere Varianten der Sauerstoff-Erzeugungseinheit 21 und der photosensiblen Partikel 25 sowie Verfahren zur Herstellung der photosensiblen Partikel 25 sind oben ausführlich beschrieben worden.

Die Erfindung betrifft eine Vorrichtung 1 und ein Verfahren zur Umwandlung von Ammoniak aus einer Ammoniak enthaltenden wässrigen Flüssigkeit 2 in molekularen Stickstoff. Die Vorrichtung 1 ist so konstruiert, dass die Flüssigkeit 2 in einem Kreislauf 3 zirkulieren kann und hierbei mehrfach durch die Vorrichtung 1 geleitet werden kann.

### Bezugszeichenliste

- 1: Vorrichtung
- 2: Flüssigkeit
- 3: Kreislauf
- 4: Einlass
- 5: Entnahmeöffnung
- 6: Kathode
- 7: Kathodenkammer
- 8: Anode
- 9: Anodenkammer
- 10: Zuleitung
- 11: Durchlass
- 12: Ausleitung
- 13: Pumpe
- 14: Ventil
- 15: Auslass
- 16: Katalysator
- 18: Anodenkammermodul
- 19: Messsensor
- 20: weiterer Messsensor
- 21: Sauerstoff-Erzeugungseinheit
- 22: Photozelle
- 23: Hohlkörper
- 24: Wandung
- 25: photosensibles Partikel
- 26: Photozellenflüssigkeit
- 27: Trägerelement
- 28: Haftmittel
- 29: Material
- 30: lichtaktive Farbstoffmoleküle
- 33: Füllstand
- 34: elektrische Verbindung
- 35: weitere Pumpe
- 36: weitere Pumpe
- 37: weiteres Ventil
- 38: weiteres Ventil
- 39: weiteres Ventil
- 40: weiteres Ventil
- 41: Tank
- 42: weiterer Tank
- 43: weiterer Tank
- 44: weiterer Tank
- 45: Huminstoff
- 46: Tonmineral
- 47: Minuspol
- 48: elektrische Leitung
- 49: Pluspol
- 50: weitere elektrische Leitung
- 51: Verbraucher
- 52: Flüssigkeitsstrom in 3
- 53: Sauerstoff-Erzeugungskreislauf
- 54: Lichtquelle
- 55: Filter
- 56: Behältnis von 7
- 57: Behältnis von 18
- 58: Zwischenboden in 57
- 59: Einlass von 18
- 60: Ausleitung von 18

## Patentansprüche

1. Vorrichtung (1) zur Umwandlung von Ammoniak aus einer Ammoniak enthaltenden wässrigen Flüssigkeit (2) in molekularen Stickstoff mit Einrichtungen (6 bis 14, 16 bis 20, 34 bis 35, 47 bis 52, 56 bis 60) zur Zirkulation der Flüssigkeit (2) in einem Kreislauf (3), mit einem Einlass (4) zur Zufügung der Flüssigkeit (2) in den Kreislauf (3) und mit einer Entnahmeöffnung (5) zur Entnahme der Flüssigkeit (2) aus dem Kreislauf (3), wobei die Einrichtungen (6 bis 14, 16 bis 20, 34 bis 35, 47 bis 52, 56 bis 60) des Kreislaufs (3) eine eine Kathode (6) aufweisende Kathodenkammer (7) und eine eine Anode (8) aufweisende Anodenkammer (9) zur Umwandlung des Ammoniaks in molekularen Stickstoff umfassen, wobei die Anodenkammer (9) eine Zuleitung (10) für die zirkulierende Flüssigkeit (2) hat, wobei die Anodenkammer (9) einen Durchlass (11) für die zirkulierende Flüssigkeit (2) in die Kathodenkammer (7) hat und wobei die Kathodenkammer (7) eine Ausleitung (12) für die zirkulierende Flüssigkeit (2) hat, die mit der Zuleitung (10) der Anodenkammer (9) über eine Pumpe (13, 35) zum Pumpen der zirkulierenden Flüssigkeit (2) verbunden ist, **dadurch gekennzeichnet, dass** die Vorrichtung (1) eine Sauerstoff-Zuleitung zur Zufügung von Wasserstoffperoxid und/oder in Wasser gelöstem Sauerstoff in den Kreislauf (3) aufweist und dass ein Material der Kathode (6) ein Katalysator zur katalytischen Spaltung von Wasserstoffperoxid in molekularen Sauerstoff und Wasser ist.

2. Vorrichtung (1) nach dem vorangehenden Anspruch, **dadurch gekennzeichnet, dass** der Durchlass (11) der Anodenkammer (9) ein Ventil (14) aufweist, mit dem dieser öffen- und verschließbar ist.

3. Vorrichtung (1) nach einem der vorangehenden Ansprüche, **dadurch gekennzeichnet, dass** die Anodenkammer (9) innerhalb der Kathodenkammer (7) angeordnet ist.

4. Vorrichtung (1) nach einem der vorangehenden Ansprüche, **dadurch gekennzeichnet, dass** die Anodenkammer (9) zusätzlich zu dem Durchlass (11) mindestens einen weiteren Auslass (15) in die Kathodenkammer (7) hat, insbesondere wobei der mindestens eine weitere Auslass (15) so dimensioniert ist, dass eine durch den Durchlass (11) in die Kathodenkammer (7) fließende Menge der Flüssigkeit (2) eine gesamte durch den mindestens einen weiteren Auslass (15) fließende Menge der Flüssigkeit (2) übersteigt.

5. Vorrichtung (1) nach einem der vorangehenden Ansprüche, **dadurch gekennzeichnet, dass** in der Anodenkammer (9) ein Katalysator (16) zur katalytischen Spaltung von Wasserstoffperoxid angeordnet ist, insbesondere wobei der Katalysator (16) Mangandioxid ist.

6. Vorrichtung (1) nach einem der vorangehenden Ansprüche, **dadurch gekennzeichnet, dass** das Material der Kathode (6) Mangandioxid ist.

7. Vorrichtung (1) nach einem der vorangehenden Ansprüche, **dadurch gekennzeichnet, dass** die Anodenkammer (9) mehr als ein Anodenkammermodul (18), insbesondere mehr als ein Anodenbehältnis (18), umfasst, wobei die Anodenkammermodule (18) in dem Kreislauf (3) miteinander in Reihe geschaltet sind, sodass sie von der Flüssigkeit (2) nacheinander durchlaufen werden, insbesondere wobei Anoden (8) der Anodenkammermodule (18) auf einem gleichen elektrischen Potential liegen.

8. Vorrichtung (1) nach einem der vorangehenden Ansprüche, **dadurch gekennzeichnet, dass** in unmittelbarer Nähe zur Kathode (6) eine Zuleitung (15) ausgebildet ist, sodass Wasserstoffperoxid oder molekularer Sauerstoff bei mit der Flüssigkeit (2) befüllten Kathodenkammer (7) im Betrieb unmittelbar und direkt an die Kathode (6) gebracht wird, insbesondere wobei die Zuleitung (15) durch einen oder den Auslass (15) der Anodenkammer (9) gegeben ist.

9. Vorrichtung (1) nach einem der vorangehenden Ansprüche, **dadurch gekennzeichnet, dass** ein Messsensor (19, 20) so angeordnet ist, dass mit ihm im Betrieb eine Eigenschaft der Flüssigkeit (2) messbar ist, insbesondere wobei die Eigenschaft eine Sauerstoffkonzentration, ein pH-Wert und/oder eine Ammonium- und/oder Ammoniakkonzentration ist.

10. Anordnung mit einer Vorrichtung (1) nach einem der vorangehenden Ansprüche und einer Sauerstoff-Erzeugungseinheit (21), wobei die Sauerstoff-Erzeugungseinheit (21) an den Kreislauf (3) angeschlossen ist, wobei die Sauerstoff-Erzeugungseinheit (21) eine Photozelle (22) umfasst, wobei die Photozelle (22) einen Hohlkörper (23) mit lichtdurchlässiger Wandung (24) aufweist und wobei in der Photozelle (22) eine Vielzahl von photosensiblen Partikeln (25) in einer Wasser enthaltenden Photozellenflüssigkeit (26) suspendiert sind, wobei ein photosensibler Partikel (25) ein Trägerelement (27) aufweist, auf dem ein Material (29) mittels eines Haftmittels (28) anhaftet, wobei das Material (29) lichtaktive Farbstoffmoleküle (30) enthält, insbesondere wobei das Material (29) Pflanzenblattpolymere von abgestorbenen und abgestoßenen Herbstblättern enthält.

11. Verfahren zur Umwandlung von Ammoniak aus einer Ammoniak enthaltenden wässrigen Flüssigkeit (2) in molekularen Stickstoff unter Verwendung einer Vorrichtung (1) gemäß einem der Ansprüche 1 bis 9 oder einer Anordnung gemäß Anspruch 10, wobei die in dem Kreislauf (3) zirkulierende Flüssigkeit (2) mehrfach durch die Vorrichtung (1) geleitet wird, **dadurch gekennzeichnet, dass** über die Sauerstoff-Zuleitung Wasserstoffperoxid und/oder in Wasser gelöster Sauerstoff der in dem Kreislauf (3) zirkulierenden Flüssigkeit (2) zugefügt wird.

12. Verfahren nach dem vorangehenden Anspruch, **dadurch gekennzeichnet, dass** zur Initialisierung die Kathodenkammer (7) mit der Flüssigkeit (2) befüllt wird und dass über die Zuleitung (10) der Anodenkammer (9) Wasserstoffperoxid und/oder in Wasser gelöster Sauerstoff in die Anodenkammer (9) eingeleitet wird, insbesondere wobei die Initialisierung beendet wird, sobald in der Flüssigkeit (2) ein Initialisierungs-Sauerstoffkonzentrationsschwellwert erreicht wird, und/oder wobei ein oder das Ventil (14) am Durchlass (11) der Anodenkammer (9) geschlossen wird.

13. Verfahren nach einem der beiden vorangehenden Ansprüche, **dadurch gekennzeichnet, dass** eine Sauerstoffkonzentration in der Flüssigkeit (2) gemessen wird und ein Zufügen bei Unterschreiten eines unteren Sauerstoffkonzentrationsschwellwerts erfolgt.

14. Verfahren nach einem der drei vorangehenden Ansprüche, **dadurch gekennzeichnet, dass** eine Ammonium- und/oder Ammoniakkonzentration gemessen wird und dass bei Unterschreiten eines unteren Ammonium- und/oder Ammoniakkonzentrationsschwellwerts die gesamte Flüssigkeit (2) oder ein Teil von ihr dem Kreislauf (3) entnommen wird.

## Claims

1. Apparatus (1) for converting ammonia from an ammonia-containing aqueous solution (2) into molecular nitrogen having units (6 to 14, 16 to 20, 34 to 35, 47 to 52, 56 to 60) for circulating the solution (2) in a circuit (3), having an inlet (4) for adding the solution (2) into the circuit (3), and having a removal opening (5) for removing the solution (2) from the circuit (3), wherein the units (6 to 14, 16 to 20, 34 to 35, 47 to 52, 56 to 60) of the circuit (3) comprise a cathode chamber (7) having a cathode (6) and an anode chamber (9) having an anode (8) for converting the ammonia into molecular nitrogen, wherein the anode chamber (9) has a supply line (10) for the circulating solution (2), wherein the anode chamber (9) has a passage (11) for the circulating solution (2) into the cathode chamber (7), and wherein the cathode chamber (7) has a discharge line (12) for the circulating solution (2), which is connected to the supply line (10) of the anode chamber (9) via a pump (13, 35) for pumping the circulating solution (2), **characterized in that** the apparatus (1) has an oxygen supply line for adding hydrogen peroxide and/or oxygen dissolved in water into the circuit (3) and **in that** a material of the cathode (6) is a catalyst for catalytic splitting of hydrogen peroxide into molecular oxygen and water.

2. Apparatus (1) according to the preceding claim, **characterized in that** the passage (11) of the anode chamber (9) has a valve (14), using which it is openable and closable.

3. Apparatus (1) according to either one of the preceding claims, **characterized in that** the anode chamber (9) is arranged inside the cathode chamber (7) .

4. Apparatus (1) according to any one of the preceding claims, **characterized in that** the anode chamber (9) has, in addition to the passage (11), at least one further outlet (15) into the cathode chamber (7), in particular wherein the at least one further outlet (15) is dimensioned so that an amount of the solution (2) flowing through the passage (11) into the cathode chamber (7) exceeds a total amount of the solution (2) flowing through the at least one further outlet (15) .

5. Apparatus (1) according to any one of the preceding claims, **characterized in that** a catalyst (16) for catalytic splitting of hydrogen peroxide is arranged in the anode chamber (9), in particular wherein the catalyst (16) is manganese dioxide.

6. Apparatus (1) according to any one of the preceding claims, **characterized in that** the material of the cathode (6) is manganese dioxide.

7. Apparatus (1) according to any one of the preceding claims, **characterized in that** the anode chamber (9) comprises more than one anode chamber module (18), in particular more than one anode container (18), wherein the anode chamber modules (18) are connected to one another in series in the circuit (3), so that the solution (2) flows through them in succession, in particular wherein anodes (8) of the anode chamber modules (18) are at an equal electrical potential.

8. Apparatus (1) according to any one of the preceding claims, **characterized in that** a supply line (15) is formed in direct proximity to the cathode (6), so that hydrogen peroxide or molecular oxygen is brought immediately and directly to the cathode (6) when the cathode chamber (7) is filled with the solution (2) in operation, in particular wherein the supply line (15) is provided by a or the outlet (15) of the anode chamber (9).

9. Apparatus (1) according to any one of the preceding claims, **characterized in that** a measuring sensor (19, 20) is arranged so that a property of the solution (2) is measurable using it in operation, in particular wherein the property is an oxygen concentration, a pH value, and/or an ammonium and/or ammonia concentration.

10. Arrangement having an apparatus (1) according to any one of the preceding claims and an oxygen-generating unit (21), wherein the oxygen-generating unit (21) is connected to the circuit (3), wherein the oxygen-generating unit (21) comprises a photocell (22), wherein the photocell (22) has a hollow body (23) having a transparent wall (24) and wherein a large number of photosensitive particles (25) are suspended in a photocell solution (26) containing water in the photocell (22), wherein a photosensitive particle (25) has a carrier element (27), on which a material (29) adheres by means of an adhesive (28), wherein the material (29) contains light-active pigment molecules (30), in particular wherein the material (29) contains plant leaf polymers from dead and dropped autumn leaves.

11. Process for converting ammonia from an ammonia-containing aqueous solution (2) into molecular nitrogen using an apparatus (1) according to any one of Claims 1 to 9 or an arrangement according to Claim 10, wherein the solution (2) circulating in the circuit (3) is guided repeatedly through the apparatus (1), **characterized in that** hydrogen peroxide and/or oxygen dissolved in water are added via the oxygen supply line to the solution (2) circulating in the circuit (3).

12. Process according to the preceding claim, **characterized in that**, for initialization, the cathode chamber (7) is filled with the solution (2) and **in that** hydrogen peroxide and/or oxygen dissolved in water is introduced into the anode chamber (9) via the supply line (10) of the anode chamber (9), in particular wherein the initialization is ended as soon as an initialization oxygen concentration threshold value is reached in the solution (2), and/or wherein a or the valve (14) at the passage (11) of the anode chamber (9) is closed.

13. Process according to either of the two preceding claims, **characterized in that** an oxygen concentration in the solution (2) is measured and addition takes place if it falls below a lower oxygen concentration threshold value.

14. Process according to any one of the three preceding claims, **characterized in that** an ammonium and/or ammonia concentration is measured and **in that**, if it falls below a lower ammonium and/or ammonia concentration threshold value, all of the solution (2) or a part of it is removed from the circuit (3).

## Revendications

1. Dispositif (1) de conversion de l'ammoniac d'une solution aqueuse (2) contenant de l'ammoniac en azote moléculaire avec des dispositifs (6 à 14, 16 à 20, 34 à 35, 47 à 52 et 56 à 60) pour faire circuler la solution (2) dans un circuit (3), avec une admission (4) pour injecter la solution (2) dans le circuit (3) et avec un orifice d'évacuation (5) pour évacuer la solution (2) du circuit (3), dans lequel les dispositifs (6 à 14, 16 à 20, 34 à 35, 47 à 52 et 56 à 60) comprennent une chambre cathodique (7) contenant une cathode (6) et une chambre anodique (9) contenant une anode (8) pour convertir l'ammoniac en azote moléculaire, dans lequel la chambre anodique (9) possède une conduite d'alimentation (10) pour la solution (2) en circulation, dans lequel la chambre anodique (9) possède une conduite (11) pour l'entrée de la solution (2) en circulation dans la chambre cathodique (7) et dans lequel la chambre cathodique (7) possède une évacuation (12) pour la solution (2) en circulation qui est reliée à la conduite d'alimentation (10) de la chambre anodique (9) par une pompe (13, 35) pour pomper la solution (2) en circulation, **caractérisé en ce que** ce dispositif (1) comporte une conduite d'alimentation d'oxygène pour injecter du peroxyde d'hydrogène et/ou de l'oxygène dissous dans de l'eau dans le circuit et qu'un matériau de la cathode (6) est un catalyseur pour la dissociation catalytique du peroxyde d'hydrogène en oxygène moléculaire et en eau.

2. Dispositif (1) selon la revendication précédente, **caractérisé en ce que** la conduite (11) de la chambre anodique (9) comporte une vanne (14) avec laquelle elle peut être ouverte ou fermée.

3. Dispositif (1) selon une des revendications précédentes, **caractérisé en ce que** la chambre anodique (9) est agencée à l'intérieur de la chambre cathodique (7).

4. Dispositif (1) selon une des revendications précédentes, **caractérisé en ce que** la chambre anodique (9) possède, en plus de la conduite (11), au moins une autre évacuation (15) donnant dans la chambre cathodique (7), en particulier l'au moins une autre évacuation (15) étant dimensionnée de telle sorte qu'une quantité de solution (2) s'écoulant à travers la conduite (11) dans la chambre cathodique (7) dépasse une quantité totale de solution (2) s'écoulant à travers l'au moins une autre évacuation (15).

5. Dispositif (1) selon une des revendications précédentes, **caractérisé en ce qu'**un catalyseur (16) est agencé dans la chambre anodique (9) pour la dissociation catalytique du peroxyde d'hydrogène, en particulier le catalyseur (16) étant en dioxyde de manganèse.

6. Dispositif (1) selon une des revendications précédentes, **caractérisé en ce que** le matériau de la cathode (6) est du dioxyde de manganèse.

7. Dispositif (1) selon une des revendications précédentes, **caractérisé en ce que** la chambre anodique (9) comprend plus d'un module de chambre anodique (18), en particulier plus d'un récipient anodique (18), les modules de chambre anodique (18) du circuit (3) étant raccordés entre eux en série de telle sorte qu'ils sont parcourus les uns après les autres par la solution (2), en particulier les anodes (8) des modules de chambre anodique (18) se trouvant au même potentiel électrique.

8. Dispositif (1) selon une des revendications précédentes, **caractérisé en ce qu'**à proximité immédiate de la cathode (7) est formée une conduite d'admission (15), de sorte que, lors du fonctionnement, le peroxyde d'hydrogène ou l'oxygène moléculaire est immédiatement et directement apporté à la cathode (6) lorsque la chambre cathodique (7) est remplie de solution (2), en particulier la conduite d'alimentation (15) étant constituée par une ou par l'évacuation (15) de la chambre anodique (9).

9. Dispositif (1) selon une des revendications précédentes, **caractérisé en ce qu'**un capteur de mesure (19, 20) est agencé de telle sorte que, lors du fonctionnement, il est possible de mesurer avec lui une caractéristique de la solution (2), cette caractéristique étant en particulier une concentration en oxygène, une valeur pH et ou une concentration en ammonium et/ou en ammoniac.

10. Equipement avec un dispositif (1) selon une des revendications précédentes et une unité de production d'oxygène (21), laquelle unité de production d'oxygène (21) est raccordée au circuit (3) et laquelle l'unité de production d'oxygène (21) comporte une cellule photoélectrique (22), la cellule photoélectrique (22) présentant un corps creux (23) avec une paroi transparente (24) et une multitude de particules photosensibles (25) étant en suspension dans un liquide de cellule photoélectrique contenant de l'eau (26), une particule photosensible (25) comportant un élément de support (27) sur lequel un matériau (29) adhère au moyen d'un matériau adhésif (28) et ce matériau (29) contenant des molécules de colorant génératrices de lumière (30), en particulier ce colorant (29) contenant des polymères de feuilles végétales provenant de feuilles automnales mortes et tombées.

11. Procédé de conversion de l'ammoniac d'une solution aqueuse (2) contenant de l'ammoniac en azote moléculaire en utilisant un dispositif (1) selon une des revendications 1 à 9 ou un équipement selon la revendication 10, selon lequel la solution (2) circulant dans le circuit (3) est entraînée plusieurs fois par le dispositif (1), **caractérisé en ce que** du peroxyde d'hydrogène et/ou de l'oxygène dissous dans l'eau peut être injecté dans la solution (2) circulant dans le circuit par la conduite d'alimentation d'oxygène.

12. Procédé selon la revendication précédente, **caractérisé en ce que**, pour l'initialisation, la chambre cathodique (7) est remplie avec la solution (2) et que du peroxyde d'hydrogène et/ou de l'oxygène dissout dans l'eau est/sont introduits dans la chambre anodique (9) par la conduite d'alimentation (10) de la chambre anodique (9), en particulier l'initialisation étant terminée dès qu'une valeur-seuil de concentration en oxygène d'initialisation est atteinte dans la solution (2), et/ou qu'une ou la vanne (14) sur la conduite (11) de la chambre anodique (9) est fermée.

13. Procédé selon une des deux revendications précédentes, **caractérisé en ce qu'**une concentration en oxygène dans la solution (2) est mesurée et qu'un ajout a lieu dans le cas où une valeur-seuil inférieure de concentration en oxygène n'est pas atteinte.

14. Procédé selon une des trois revendications précédentes, **caractérisé en ce qu'**une concentration en ammonium et/ou en ammoniac est mesurée et que la totalité ou une partie de la solution (2) est retirée du circuit dans le cas où une valeur-seuil inférieure de concentration en ammonium et/ou en ammoniac n'est pas atteinte.
